# EUROPEAN PATENT APPLICATION

(11) **EP 1 901 384 A1**
(43) Date of publication of application: **19.03.2008**
(21) Application number: 07115735.8
(22) Date of filing: 05.09.2007
(51) Int. Cl.: H01M 8/04

(54) **Fuel Cell System with Purging Device and Method for Operating same**

(30) Priority: 12.09.2006 KR 20060088091
(71) Applicant: Samsung SDI Co., Ltd., Suwon-city, Kyungki-do 442-390 (KR)
(72) Inventor: AHN, Jim-goo, Gyeonggi-do (KR); KIM, Ju-yong, Gyeonggi-do (KR); LEE, Sung-chul, Gyeonggi-do (KR); HAN, Man-seok, Gyeonggi-do (KR); LEE, Yong-Kul, Gyeonggi-do (KR); LEE, Chan-ho, Gyeonggi-do (KR); GOROBINSKIY, Leonid, Gyeonggi-do (KR)
(74) Representative: Grey, Ian Michael

(57) **Abstract**

A fuel cell system with a purging device and a method for stopping the operation of a fuel cell system comprising: a reforming device comprising a heat source unit to generate combustion heat to supply a reforming unit with heat to catalytically reform fuel to a hydrogen rich reforming gas; a fuel cell stack to generate electric energy by electrochemically reacting the reforming gas with an oxidizer and having an anode supplied with the reforming gas and a cathode supplied with the oxidizer therein; and a purging device to block the reforming gas and the oxidizer from the fuel cell stack and to supply an exhaust gas from the heat source unit into the fuel cell stack.

## Description

Aspects of the present invention relate to a fuel cell system and more specifically to a fuel cell system with a purging device and a method for operating the same to maintain the performance of the fuel cell system, to expand the life of the system, and to decrease volume and weight of the system.

A fuel cell is a power generation system that directly converts the energy of a chemical fuel such as methanol or hydrogen, etc., into electric energy. The fuel cell has advantages in view of low environmental pollution and high efficiency. Since the fuel cell generates electric energy using an energy source such as petroleum, natural gas, methanol, etc., which can easily be stored and transported, it has been spotlighted as a next generation energy source. Depending upon the types of electrolyte used, fuel cells can be sorted into phosphoric acid fuel cells, molten carbonate fuel cells, solid oxide fuel cells, polymer electrolyte fuel cells, and alkaline fuel cells, etc. These respective fuel cells basically operate on the same principles, but use different fuels, operating temperatures, catalysts, and electrolytes, etc.

The polymer electrolyte fuel cell is a fuel cell that uses a polymeric membrane with hydrogen-ion exchanging characteristic as the electrolyte. The polymer electrolyte fuel cell is favored over the other fuel cells as it has a high output characteristic including a large current density, a simple structure, fast starting and response characteristics, and an excellent durability. Also, since the polymer electrolyte fuel cell can use methanol or natural gas in addition to hydrogen as fuel, it is applicable to various fields, such as a power source for a vehicle, a distributed power generator suitable for installing on the spot, an emergency power source for war supplies, and a power source for a spaceship, etc.

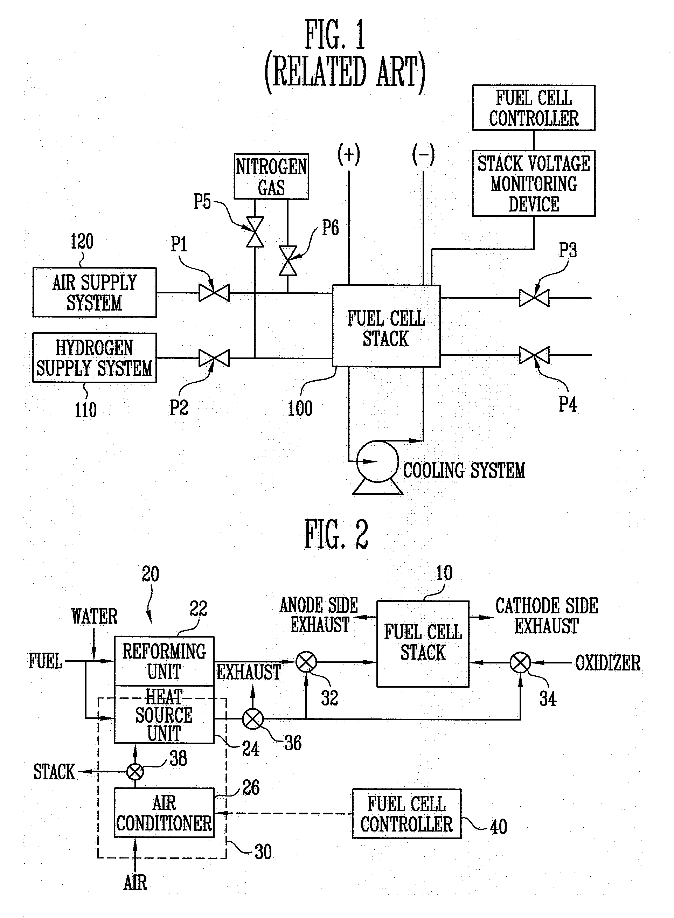

FIG. 1 is a diagram showing a general polymer electrolyte fuel cell system. As shown in FIG. 1, a conventional polymer electrolyte fuel cell generates electric energy by electrochemically reacting hydrogen supplied to an anode of a fuel cell stack 100 with an oxidizer supplied to a cathode thereof. The hydrogen can be supplied from a hydrogen supply system 110, wherein the hydrogen supply system 110 comprises an apparatus supplying hydrogen directly to the fuel cell stack 100 or a reforming device that catalytically generates hydrogen from chemical fuel. Meanwhile, the oxidizer can be supplied to the fuel cell stack 100 from an air supply system 120, which may be configured as an air pump or a fan to supply air containing oxygen.

When the operation of the conventional polymer electrolyte fuel cell system is stopped, moisture remaining in flow fields of the anode and cathode of the fuel cell stack 100 is condensed as the temperature of the stack drops. The metal catalysts of the anodes and electrodes within the fuel cell stack 100 may be damaged by such condensation. Also, the metal catalysts of the anodes and cathodes can be poisoned by fuels that remain after the fuel cell stack is shut down. Therefore, when the operation of the conventional polymer electrolyte fuel cell system is stopped, it is customary to first close a first valve P1 and a second valve P2, thereby isolating the fuel cell stack 100 from both the hydrogen supplied by the hydrogen supply system 110 and the oxidizer supplied by the air supply system 120. Next, the third and fourth valves, P3 and P4, respectively, are opened, and exhaust pressure controlling valves P5 and P6 supply a predetermined pressure of nitrogen gas to purge the fuel cell stack 100 of moisture and fuels by producing an inert atmosphere within the fuel cell stack 100.

However, such conventional polymer electrolyte fuel cell systems must contain a separate storing device to store an inert gas, as in this example nitrogen gas; thus, the system requires an additional element resulting in an increased weight and volume thereby rendering it terribly inconvenient for carrying or moving. Further, in the case of a vehicle that cannot legally carry an inert gas, other way to purge the fuel cell system for a vehicle must be devised.

It is an aspect of the present invention to provide a fuel cell system with a purging device capable of efficiently purging the inside of a fuel cell stack, when the operation of the fuel cell system is stopped, using effluents produced by the system, such as an exhaust gas generated from the from the reforming device.

It is another aspect of the present invention to provide a method of stopping the operation of a fuel cell system with the purging device so as to improve the stability of the fuel cell system and expand the life of the fuel cell system by efficiently removing residues that damage the catalysts when the operation of the fuel cell system is stopped.

According to an aspect of the present invention, to accomplish the above and/or other desired technical aspects there is provided a fuel cell system comprising: a reforming device comprising a heat source unit, which generates combustion heat from the burning of a combustion fuel to supply to a reforming unit, and a reforming unit to catalytically generate hydrogen-rich reforming gas from a reforming fuel using the combustion heat from the heat source unit; a fuel cell stack to generate electric energy by electrochemically reacting the hydrogen-rich reforming gas with an oxidizer and having an anode supplied with the reforming gas and a cathode supplied with the oxidizer; and a purging device to block the hydrogen-rich reforming gas and the oxidizer from the fuel cell stack and to supply an exhaust gas from the heat source unit to the inside of the fuel cell stack to purge the fuel cell stack of water and excess fuel.

Preferably, although not necessarily, the purging device comprises a combustion reactor to remove oxygen contained in the exhaust gas through complete combustion of the exhaust gas, the combustion reactor being the heat source unit and an air conditioner, which controls the amount of air supplied to the heat source unit for complete combustion by the heat source unit.

Both the reforming fuel and combustion fuel may be petroleum, natural gas, methanol, or any other such fuel with hydrocarbon groups.

Preferably, although not necessarily, the purging device can further comprise a condenser to condense vapor in the exhaust gas from the heat source unit.

Preferably, although not necessarily, the fuel cell system comprises a first field switch installed on a path connecting the exhaust vent of the heat source unit to an exhaust outlet of the reforming device (exhausting the hydrogen-rich reforming gas) and an anode inlet of the fuel cell stack; and a second field switch installed on a path connecting the exhaust vent of the heat source unit to a cathode inlet of the fuel cell stack.

According to another aspect of the present invention, there is provided a method to stop the operation of a fuel cell system. The fuel cell system comprises a reforming device comprising of a heat source unit, which generates combustion heat to supply to a reforming unit, and a reforming unit to catalytically generate hydrogen-rich reforming gas from a reforming fuel using the combustion heat from the heat source unit; and a fuel cell stack to generate electric energy by electrochemically reacting the hydrogen-rich reforming gas with an oxidizer and having an anode supplied with the reforming gas and a cathode supplied with the oxidizer. The method comprising: blocking the reforming gas and the oxidizer from the fuel cell stack by controlling a field switch installed on a path connecting an exhaust outlet of the reforming device venting the hydrogen-rich reforming gas to an anode inlet of the fuel cell stack and another field switch installed on a cathode inlet of the fuel cell stack; completely combusting fuel in the heat source unit by controlling the amount of air supplied to the heat source unit; and supplying an exhaust gas from the heat source unit through any one of the field switches to the anode inlet or the cathode inlet of the fuel cell stack.

Moreover, the fuel cell stack may be purged of remaining reactants as the method to stop the operation of the fuel cell system further comprises: continuing to flow the exhaust gas from the heat source unit through the fuel cell stack.

According to another aspect of the present invention, there is provided a method to purge the fuel cell stack. The fuel cell system comprises a reforming device comprising of a heat source unit, which generates combustion heat to supply to a reforming unit, and a reforming unit to catalytically generate hydrogen-rich reforming gas from fuel using the combustion heat from the heat source unit; and a fuel cell stack to generate electric energy by electrochemically reacting the hydrogen-rich reforming gas with an oxidizer and having an anode supplied with the reforming gas and a cathode supplied with the oxidizer. The method comprising: when the fuel cell system is stopped, completely combusting fuel in the heat source unit by controlling the amount of air supplied to the heat source unit; supplying an exhaust gas from the heat source unit through any one of the field switches to the anode inlet or the cathode inlet of the fuel cell stack; and flowing the exhaust gas from the heat source through the fuel cell stack.

Preferably, but not necessarily, the methods for purging the fuel cell stack and/or stopping the operation of the fuel cell system further include condensing vapor from the exhaust gas from the heat source unit before the exhaust enters the fuel cell stack.

Additional aspects and/or advantages of the invention will be set forth in part in the description which follows and, in part, will be obvious from the description, or may be learned by practice of the invention.

These and/or other aspects and advantages of the invention will become apparent and more readily appreciated from the following description of the embodiments, taken in conjunction with Figures 2 to 5 of the accompanying drawings of which:
FIG. 1 is a schematic diagram for explaining a conventional general polymer electrolyte fuel cell system;
FIG. 2 is a block diagram showing a fuel cell system with a purging device according to a first embodiment of the present invention;
FIG. 3 a block diagram showing a fuel cell system with a purging device according to a second embodiment of the present invention;
FIG. 4 is a flowchart for explaining a method for stopping the operation of a fuel cell system according to aspects of the present invention;
FIG. 5 is a diagram for explaining a fuel cell stack applicable to a fuel cell system according to aspects the present invention;

Reference will now be made in detail to the present embodiments of the present invention, examples of which are illustrated in the accompanying drawings, wherein like reference numerals refer to the like elements throughout. The embodiments are described below in order to explain the present invention by referring to the figures.

FIG. 2 is a block diagram showing a fuel cell system with a purging device according to a first embodiment of the present invention.

Referring to FIG. 2, the fuel cell system supplies effluents generated from the purging device 30, which is already a component of the system, to the fuel cell stack 10 to prevent damage to the system, more specifically to prevent damage to catalysts or components in the fuel cell stack 10 caused if the operation of the system is abruptly stopped; to safely stop the operation of the fuel cell stack; to prolong the life of the fuel cell stack as compared to the prior art; and to decrease the volume and weight of the fuel cell system. Here, the fuel cell system comprises a reforming device 20 comprising a heat source unit 24 generating combustion heat or other combustion device included in the system, the effluent of which is a combustion gas, that is, an exhaust gas; and a reforming unit 22 producing a hydrogen-rich fuel; a fuel cell stack 10 producing electrical energy from the hydrogen-rich fuel; and a purging device comprising the heat source unit 24 and an air conditioner26.

The fuel cell stack 10 generates electric energy by electrochemically combining hydrogen in the reforming gas supplied to the fuel cell stack's 10 anode with oxygen from the air supplied to the fuel cell stack's 10 cathode. The fuel cell stack 10 may be configured of a polymer electrolyte fuel cell using as the electrolyte a polymeric membrane with hydrogen ion exchanging characteristics. In particular, the fuel cell stack 10 may also be configured with a polymer electrolyte fuel cell including a Nafion® electrolyte membrane, which requires humidification.

The reforming device 20 is a device supplying the reforming gas to the anode of the fuel cell stack 10, and comprises a reforming unit 22 and a heat source unit 24. The reforming unit 22 comprises any shape of housing and a reforming catalyst installed in the housing, and can be implemented as a reforming reactor to reform a reforming fuel and water into a vapor by a catalytic reaction. The heat source unit 24 comprises any shape of other housing placed adjacent the reforming unit 22 and a combustion catalyst installed in the housing. And, the heat source unit 24 can be operated as a combustion reactor to generate heat by combusting fuel. On the other hand, the heat source unit 24 can be operated as a burner to supply heat to the reforming unit 22.

The purging device 30 is a device for purging the fuel cell stack 10 by supplying an inert gas to the anode and cathode of the fuel cell stack 10 when the operation of the system is stopped. However, the purging device 30 can also be operated so as to inhibit operation of the fuel cell stack 10 by supplying an inert gas to the anode and/or cathode of the fuel cell stack 10 when the fuel cell stack 10 is operating. Purging device 30 comprises the heat source unit 24 in the reforming device 20 and an air conditioner 26. The heat source unit 24 and the air conditioner 26 operate together as a complete combustion reactor to completely combust a combustion fuel so as to provide an inert gas to the fuel cell stack 10. The air conditioner 26 controls the amount of air supplied to the heat source unit 24 for the complete combustion of the combustion fuel supplied to the heat source unit 24. The air conditioner 26 can be implemented as an air supply system, such as an air pump or a fan, etc., which are often already included in existing fuel cell systems. The fuel cell controller 40 can control the air conditioner 26 to control the amount of air supplied to the heat source unit 24 thereby controlling the percentage of combustion within the heat source unit 24. The fuel cell controller 40 can be implemented as a microprocessor.

The air conditioner 26 supplies purified air to the heat source unit 24 for the production of an inert gas through complete combustion. When air is almost pure nitrogen and oxygen, 99% or more, an equivalent ratio of combustion fuel to air can be supplied to the heat source unit 24 for complete combustion to produce an inert gas. As the nearly pure air is combusted, oxygen is consumed; upon complete combustion, mostly nitrogen with less carbon dioxide, carbon monoxide, and water vapor remain leaving an inert gas with which the operation of the fuel cell stack 10 may be ceased or with which the fuel cell stack 10 may be purged.

Further, the fuel cell system according to the first embodiment of the present invention comprises a first field switch 32, a second field switch 34, a third switch 36, and a fourth field switch 38 for purifying the fuel cell stack 10 using the purging device 30.

The first field switch 32 is installed on a path connecting an outlet of the reforming unit 22 to a vent of the heat source unit 24 and an anode inlet of the fuel cell stack 10. When the operation of the fuel cell system is stopped or being stopped, the first field switch 32 blocks the connection of the reforming unit 22 and the anode inlet of the fuel cell stack 10 and connects the heat source unit 24 to the anode inlet of the fuel cell stack 10. By arranging the first field switch 32 in this configuration, the heat source unit 24 can be operated to completely combust fuel to supply fuel cell stack 10 with an inert gas to purify the fuel cell stack 10. Here, the exhaust gas includes nitrogen, carbon dioxide, carbon monoxide, and water vapor obtained when completely combusting chemical fuel with almost pure air.

The second field switch 34 is installed on a path connecting a vent of the heat source unit 24 and a cathode inlet of the fuel cell stack 10. When the operation of the system is stopped or being stopped, the second field switch 34 blocks the supply of oxidizer to the fuel cell stack 10 and connects the heat source unit 24 to the cathode inlet of the fuel cell stack 10 so that it can be operated to supply the completely combusted exhaust gas from the heat source unit 24 to the cathode side of the fuel cell stack 10 for purifying the fuel cell stack 10 and removing remaining reactants.

The third field switch 36 is installed adjacent to a vent of the heat source unit 24, and when the system is operating, exhausts an incompletely combusted exhaust gas from the heat source unit 24. The incompletely combusted exhaust gas can be exhausted into the air or supplied to the reforming unit 22 as another source of fuel for improving efficiency of the reforming unit 22. When the operation of the system is stopped or being stopped, the third field switch 36 operates to supply a completely combusted exhaust gas from the heat source unit 24 to the fuel cell stack 24, through first field switch 32 and second field switch 34.

The fourth field switch 38 is installed on a side of an air inlet to the heat source unit 24. When the operation of the system is stopped or being stopped, fourth field switch 38 operates to supply the air from the air conditioner 26 to the heat source unit 24; and, when the system is operating, fourth field switch 38 operates to supply the air from the air conditioner 26 to the cathode side of the fuel cell stack 10.

The first, second, third, and fourth field switches, 32, 34, 36, and 38, respectively, are implemented as 3-port valves for simplifying the structure of the fuel cell system and are controlled by the fuel cell controller 40. Meanwhile, the second field switch 34 and the fourth field switch 38 can be implemented as one 4-port valve, fifth field switch (not shown). In this case, when the operation of the fuel cell stack 10 is stopped or being stopped, the 4-port valve is operated to supply the air passing from the air conditioner 26 to only the heat source 24 and not to the fuel cell stack 10.

FIG. 3 is a block diagram illustrating a fuel cell system with a purging device according to a second embodiment of the present invention;

Referring to FIG. 3, the fuel cell system according to the second embodiment of the present invention comprises a condenser 28 coupled to the outlet side of the heat source 24, wherein the condenser 28 condenses vapor from the exhaust gas produced by the heat source unit 24 which purges or stops the operation of the fuel cell stack 10a. To this end, the fuel cell system comprises a fuel cell stack 10a, the reforming device 20, a purging device 30a, and a condenser 28.

The fuel cell stack 10a is preferably, but not necessarily, implemented as a polymer electrolyte fuel cell, in particular a polymer electrolyte fuel cell comprising a polymer membrane that does not require humidification, and furthermore a polymer membrane in which phosphoric acid is impregnated.

The purging device 30a comprises the heat source 24 in the reforming device 20, an air conditioner 26a to control the amount of air supplied to the heat source unit 24, and the condenser 28 to condense water vapor from the completely combusted exhaust gas produced by the heat source unit 24.

The air conditioner 26a can be implemented to include at least one of the functions of the fuel cell controller 40a or a logic circuit using a flip-flop by controlling an air supply system together with another existing air supply system.

The condenser 28 condenses and removes water vapor from the exhaust gas and comprises a device to condense water vapor by taking thermal energy away from the exhaust gas and/or a device to remove water vapor by adsorbing it. For example, the condenser 28 can be implemented as a steam condenser, a surface steam condenser, or a surface condenser, etc.

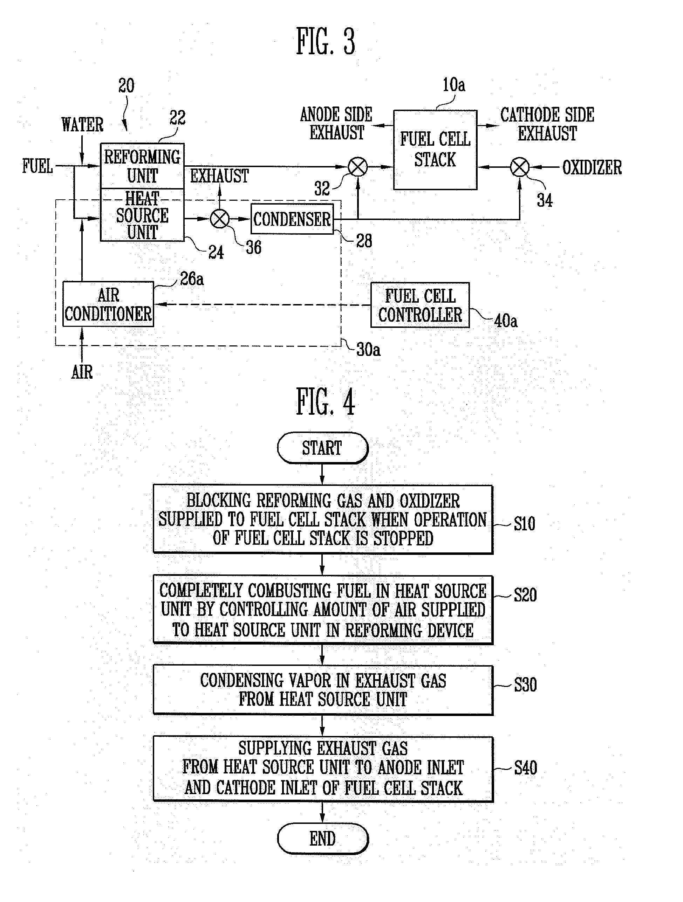

The method of operating the fuel cell system with the purging device will be described with reference to FIGS. 3 and 4.

The method to stop the operation of a fuel cell system is described in reference to fuel cell system of FIG. 3, which comprises a reforming device 20 comprising of a heat source unit 24, which generates combustion heat to supply to a reforming unit 22, and a reforming unit 22 to catalytically generate hydrogen-rich reforming gas from a reforming fuel using the combustion heat from the heat source unit 24; and a fuel cell stack 10a to generate electric energy by electrochemically reacting the hydrogen-rich reforming gas with an oxidizer and having an anode supplied with the reforming gas and a cathode supplied with the oxidizer; and a condenser 28. The method comprises first the blocking the reforming gas and the oxidizer from the fuel cell stack by controlling the field switch 28 installed on a path connecting an exhaust outlet of the reforming device venting the hydrogen-rich reforming gas to an anode inlet of the fuel cell stack and the field switch 34 installed on a cathode inlet of the fuel cell stack. Then, a combustion fuel is completely combusted in the heat source unit 24 as the air conditioner 26a supplies a controlled amount of air to the heat source unit 24. The completely combusted fuel, the exhaust gas, from the heat source unit 24 is then, in this configuration, supplied first to a condenser 28 to remove water vapor from the exhaust gas and supplied second to the fuel cell stack 10a through the operation of first, second, and third field switches 32, 34, and 36. In other embodiments, the condenser 28 may be bypassed, and wet vapor may be supplied to the fuel cell stack 10a. The exhaust gas from the heat source unit 24 may enter the fuel cell stack 10a through the anode inlet or the cathode inlet, or both.

Moreover, the fuel cell stack may be purged of remaining reactants as the method to stop the operation of the fuel cell system further comprises: continuing to flow the exhaust gas from the heat source unit through the fuel cell stack.

According to another aspect of the present invention, there is provided a method to purge the fuel cell stack. The fuel cell system of FIG 3 again comprises a reforming device 20 comprising of a heat source unit 24, which generates combustion heat to supply to a reforming unit 22, and a reforming unit 22 to catalytically generate hydrogen-rich reforming gas from a reforming fuel using the combustion heat from the heat source unit 24; and a fuel cell stack 10a to generate electric energy by electrochemically reacting the hydrogen-rich reforming gas with an oxidizer and having an anode supplied with the reforming gas and a cathode supplied with the oxidizer; and a condenser 28.

The method of purging the fuel cell stack 10a comprises the operations as outlined in FIG. 4. When the operation of the fuel cell system is stopped, the reforming gas supplied to the anode of the fuel cell stack 10a and the oxidizer supplied to the cathode of the fuel cell stack 10a are blocked (S10). The operation can be implemented by controlling the first and second field switches 32 and 34 using the fuel cell controller 40a, which controls the overall operation of the fuel cell system.

Next, the amount of air supplied from the air conditioner 26a to the heat source unit 24 is set to completely combust the combustion fuel supplied to the heat source unit 24 of the purging device 30a (S20).

Then, the water vapor in the exhaust gas from the heat source unit 24 is condensed by the condenser 28 (S30). In this operation, condensing the water vapor in the exhaust gas is to prevent the water vapor generated by the combustion reaction from being supplied to the fuel cell stack 10a when the membrane does not require humidification. However, if humidification of the membrane is required, then the condenser 28 can be omitted.

Subsequently, the exhaust gas from the heat source unit 24 and having vapor condensed by the condenser 28 is supplied to the anode inlet and/or the cathode inlet of the fuel cell stack (S40). In this operation, the fuel cell stack is purged by the exhaust gas, which substantially comprises nitrogen, carbon dioxide, and carbon monoxide. The fuel cell stack 10a is purged by the inert gas and the excess moisture and residual fuel are removed.

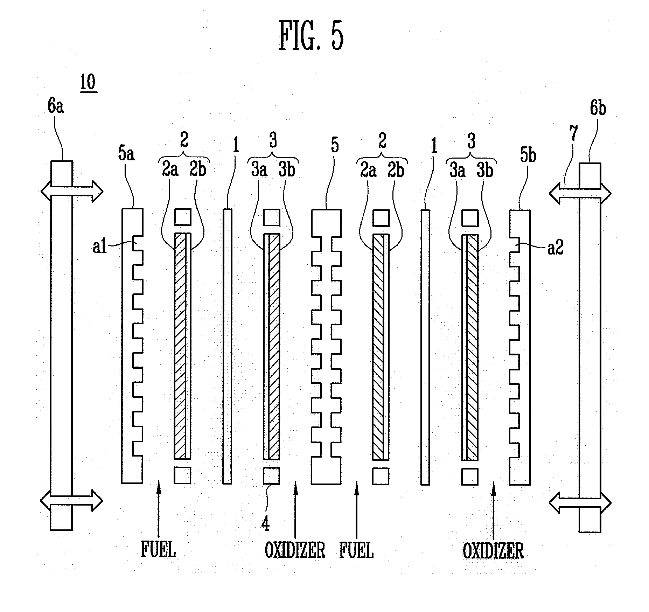

FIG. 5 is a diagram for explaining a fuel cell stack applicable to a fuel cell system according to aspects of the present invention.

Referring to FIG. 5, the polymer electrolyte fuel cell stack 10 using a polymer membrane as electrolyte includes a plurality of unit cells. The unit cell includes a polymer electrolyte membrane 1 to which an anode 2 and a cathode 3 are adjoined, one on each side of the polymer electrolyte membrane 1. The structure of the unit cell comprising polymer electrolyte membrane 1, the anode 2, and the cathode 3 is called a membrane-electrode assembly. The anode 2 and the cathode 3 comprise metal catalyst layers 2a and 3b and diffusion layers 2b and 3a, respectively, in order to improve characteristics, such as electrochemical reaction, ion conductivity, electron conductivity, fuel transferability, by-products transferability, and interface stability, etc.

Further, the fuel cell stack 10 comprises a first plate 5a provided with a flow field a1 for supplying fuel to the anode 2 and a second plate 5b provided with a flow field a2 for supplying oxidizer to the cathode 3. The first plate 5a and the second plate 5b can be manufactured with one bipolar plate 5, wherein the flow fields a1 and a2 are exposed on the both sides thereof. When the plurality of the unit cells are structurally stacked between a pair of end plates 6a and 6b by a joint 7, the gasket 4 of the plates 5a and 5b is installed by being interposed between the stacked unit cells.

The operating principle of the fuel cell stack 10 will be described as follows.
If the hydrogen-rich fuel, that is, the reforming gas is supplied to the anode 2 and the oxidizer is supplied to the cathode 3, hydrogen ions generated from the metal catalyst layer 2a of the anode side move to the cathode 3 through the polymer electrolyte membrane 1 so that water is generated in the metal catalyst layer 3b of the cathode 3 by reacting the hydrogen ions and oxygen with electrons. Meanwhile, the electrons generated from the metal catalyst 2a of the anode 2 move to the cathode 3 through the external circuit so that the variations of free energy obtained by chemical reaction are converted into electric energy. Overall reaction equation becomes the following Reaction Equation 1.

[Reaction Equation 1] Anode : H2(g) - > 2H+ + 2e- Cathode : 1/2O2(g) + 2H+ + 2e-- > H2O(1) Overall: H2(g) + 1/202(g) - > H2O(1)

The pressure of a reacting gas in the Reaction Equation 1 can range from about 1 atmosphere to about 8 atmospheres; and, the pressures on both sides of the electrolyte membrane 1 are generally equal.

The structure of the fuel cell stack as describe above is applicable to the polymer electrolyte fuel cell with the Nafion® electrolyte membrane, which requires humidification, as well as the fuel cell stack with the electrolyte membrane in which phosphoric acid is impregnated.

Aspects of the invention demonstrate the stopping of operations of a fuel cell stack by the introduction of an inert gas generated with generally existing equipment used in a new way. The stopping of the fuel cell stack by the above-described method prevents water vapor from condensing on the sensitive surfaces inside the fuel cell stack 10 as well as prevents residual fuel from damaging the catalytic surfaces, metal catalyst layers 2a and 3b, of the fuel cell stack 10.

Aspects of the invention demonstrate the removal of reactants remaining in the fuel cell stack 10 so that the problems caused from phenomena such as a drop of temperature due to the stoppage of the operation, condensation of water vapor on a surface of the catalyst, and condensation of water vapor on a surface of the phosphoric acid membrane can be prevented, thereby expanding the life of the system.

As described above, it is not necessary to install a tank for inert gas as it is possible to effectively remove reactants from the fuel cell stack by using existing components and by changing the logic of the operations. Doing so expands the life of the system by preventing condensation of vapor on a surface of an electrode and provides for a more mobile fuel cell system by reducing the volume and weight thereof.

Although a few embodiments of the present invention have been shown and described, it would be appreciated by those skilled in the art that changes may be made in this embodiment without departing from the principles of the invention, the scope of which is defined in the claims.

## Claims

1. A fuel cell system comprising:
a reforming device comprising a heat source unit that generates combustion heat, and a reforming unit that generates hydrogen-rich reforming gas by catalytic reaction of a reforming fuel using combustion heat generated by the heat source unit;
a fuel cell stack that generates electric energy by electrochemically reacting hydrogen-rich reforming gas generated by the reformer with an oxidizer, the fuel cell stack comprising an anode to receive hydrogen-rich reforming gas, and a cathode to receive an oxidizer; and
a purging device that blocks hydrogen-rich reforming gas and the oxidizer from entering the fuel cell stack and supplies exhaust gas generated by the heat source unit to the inside of the fuel cell stack to stop and/or purge the fuel cell system.

2. The fuel cell system of claim 1, wherein the purging device is configured to block the flow of hydrogen-rich reforming gas and oxidizer into the fuel cell stack and supply the exhaust gas generated by the heat source unit to the inside of the fuel cell stack after the fuel cell stack has been stopped.

3. The fuel cell system of claim 1, wherein the purging device is configured to block the flow of hydrogen-rich reforming gas and oxidizer into the fuel cell stack and supply the exhaust gas generated by the heat source unit to the inside of the fuel cell stack when the fuel cell stack is operating.

4. The fuel cell system of any preceding claim, wherein the purging device comprises a condenser to condense vapor in the exhaust gas from the heat source unit.

5. The fuel cell system of claim 4, wherein the fuel cell stack comprises a polymer electrolyte membrane not requiring humidification.

6. The fuel cell system of claim 5, wherein the polymer electrolyte membrane comprises an electrolyte membrane in which phosphoric acid is impregnated.

7. The fuel cell system of any of claims 1 to 4, wherein the fuel cell stack comprises a polymer electrolyte membrane requiring humidification.

8. The fuel cell system of claim 7, wherein the polymer electrolyte membrane comprises a Nafion electrolyte membrane.

9. The fuel cell system of any preceding claim, wherein the fuel cell system comprises a first field switch installed in a flowpath connecting a vent of the heat source unit to an outlet of the reforming device through which the reforming gas is exhausted from the reformer and an anode inlet of the fuel cell stack; and a second field switch installed in a flowpath connecting the vent of the heat source unit to a cathode inlet of the fuel cell stack.

10. The fuel cell system of claim 9, wherein the first and second field switches are 3-port valves.

11. The fuel cell system of claim 9 or claim 10, further comprising a third field switch coupled to the vent of the heat source unit through which exhaustgas from the heat source is exhausted when the fuel cell system is operating.

12. The fuel cell system of claim 11, wherein the purging device comprises a combustion reactor to generate inert gas from the complete combustion of a combustion fuel, the combustion reactor comprising the heat source unit and an air conditioner.

13. The fuel cell system of claim 12, wherein the air conditioner is configured to supply oxidizer to the cathode of the fuel cell stack and the heat source unit.

14. The fuel cell system of claim 12 or claim 13, wherein the air conditioner is an air supply system supplying an oxidizer to the fuel cell stack, the air conditioner being controlled by a fuel cell controller, the system further comprising a fourth field switch blocking the supply of oxidizer to the fuel cell stack and supplying oxidizer to the heat source unit, when the fuel cell system is being stopped and/or purged.

15. The fuel cell of claim 14, further comprising a fifth field switch connecting the heat source unit, the air conditioner, and the cathode inlet of the fuel cell stack.

16. The fuel cell system of claim 1, wherein the fuel cell stack comprises a plurality of unit cells wherein each of the unit cells comprising:
an anode with a metal catalyst layer and a diffusion layer;
a polymer electrolyte membrane; and
a cathode with a metal catalyst layer and a diffusion layer,
wherein the anode and the cathode are separated by the polymer electrolyte membrane, the polymer electrolyte membrane having generally equal pressures on both an anode side and a cathode side, and
the fuel cell stack further comprises a plate to separate the plurality of unit cells.

17. The fuel cell system of claim 16, wherein the plate to separate the plurality of unit cells comprises a bipolar plate.

18. A method for stopping and/or purging a fuel cell system comprising:
blocking hydrogen-rich reforming gas and oxidizer from entering a fuel cell stack within the fuel cell system;
completely combusting a combustion fuel generating an exhaust gas; and
supplying the exhaust gas to the fuel cell stack.

19. A method according to claim 18, wherein the fuel cell has an anode and a cathode and the step of blocking hydrogen-rich reforming gas and oxidizer from entering the fuel cell stack comprises controlling a first field switch installed on a path connecting an outlet of the reforming device, which exhausts the hydrogen-rich reforming gas, to an anode inlet of the fuel cell stack and by controlling a second field switch installed on a cathode inlet of the fuel cell stack so that the exhaust gas flowing from the heat source unit to the anode inlet of the fuel cell stack flows through a first field switch and/or from the heat source unit to the cathode of the fuel cell stack through a second field switch.

20. The method of claim 18 or 19, further comprising flowing the exhaust gas from the heat source unit through the fuel cell stack for an amount of time.

21. The method of claims 18 to 20, wherein the fuel cell system includes a condenser and the method includes flowing the exhaust gas from the heat source unit through the condenser prior to entry into the fuel cell stack so as to condense water vapor out of the exhaust gas.

22. The method of claims 18 to 21, wherein the system includes an air supply system and the method includes the step of controlling the amount of air supplied to the heat source unit; and controlling the air supply system to supply oxidizer to the fuel cell stack.
